Europäisches Patentamt

European Patent Office

Office européen des brevets

(19)

(11) Publication number: **0 350 543**
**A1**

(12)

# EUROPEAN PATENT APPLICATION

(21) Application number: 88306333.1

(22) Date of filing: 12.07.88

(51) Int. Cl.⁴: **F25D 13/06 , A23B 4/06 , A23K 1/10**

(43) Date of publication of application:
**17.01.90 Bulletin 90/03**

(84) Designated Contracting States:
**AT BE CH DE ES FR GB GR IT LI LU NL SE**

(71) Applicant: **OMAHA COLD STORAGE TERMINALS, INC.**
**800 Harney Street**
**Omaha Nebraska 68102(US)**

(72) Inventor: **Mattson, Glenn H.**
**7406 Frontier Trail**
**Chanhassen Minnesota 55317(US)**

(74) Representative: **Kerr, Simonne June et al**
**European Patent Attorney POTTS, KERR & CO. P.O. Box 688**
**Ascot Berkshire SL5 8YT(GB)**

(54) **By-products chiller and method for using same.**

(57) An improved animal by-products and hides chiller (10) is provided for use in the packing plant for chilling fresh by-products and hides so that spoilage is minimized. The chiller (10) generally includes a rotatable elongated tank (12) having an inlet end (20) for introducing the warm by-products or hides and an outlet end for removing the cooled by-products or hides from the tank (10). The side wall (18)of the tank (12) is void of apertures such that the need to clean the tank (12) is minimized. As the tank (12) rotates, baffle bars (66) agitate the by-products or hides. The baffle bars (66) are removably secured to the interior of the tank (12), and can be exchanged with other baffle bars (66) so as to accommodate various types of by-products or hides being chilled. A strainer unit (58) is positioned at the outlet end (24) of the tank (12) and receives the cooled by-products and the liquid coolant. The liquid coolant drains through a plurality of removable straining trays (62) in a strainer unit (58) so as to remove solids from the liquid. The liquid coolant is then pumped back to the coolant source (16) for re-cooling thereby, and is subsequently reintroduced into the tank (12) for cooling additional by-products or hides therein.

Packing plant by-products, such as lungs, kidneys, hearts and other parts generally not consumed by humans, are often sold and used to make pet food. These by-products are initially at the body temperature of the butchered animal when removed therefrom, and are therefore highly susceptible to spoilage. Due to such potential for spoilage, the by-products have a very short life. The warm by-products must be quickly transported from the packing plant which slaughters the animal to the remote processing plant for conversion into pet food. Without such hurried pick-up and delivery, the by-products become spoiled and must be discarded.

U.S. Patents 4,578,957 and 4,577,466 both disclose a by-products chiller for chilling fresh animal by-products and thereby reducing potential spoilage of the by-products prior to further processing. In both of these patents, the chiller basically comprises a rotatable cylindrical tank having an inlet end for introducing, fresh animal by-products and an outlet end for removing chilled by-products A liquid coolant is introduced into the tank and drains from the tank through a plurality of apertures in the side wall thereof. The liquid coolant is re-cooled and recirculated through the tank for cooling additional by-products.

One of the primary problems with the chillers disclosed in the '957 and '466 patents is that the plurality of apertures in the tank through which the liquid coolant drains become plugged by hair, fat, skin and the like which are extraneous associated materials commonly found on the by-products. Such plugging of the apertures prevents effective circulation of the liquid coolant, and thereby necessitates timely and costly cleaning of the aperture in the tank.

The chillers of the above mentioned patents also have elongated baffle bars permanently fixed to the interior side wall of the tank. These baffle bars facilitate the chilling of the by-products by agitating the by-products as the tank rotates. However, different types of by-products are better agitated by different sized and shaped baffle bars. For example, beef by-products are generally larger and heavier than pork by-products, and therefore larger baffle bars are required to agitate the beef by-products.

It is also desirable to chill fresh animal hides in the chiller so that conventional chemicals and salts are not necessary for the preservation of the hide. However, a baffle bar with a broad or rounded edge is required to agitate the hide, which may be damaged by the relatively sharp edge L-shaped bars shown in the '957 and '466 patents.

An object of the present invention is the provision of an improved by-products chiller for lowering the temperature of fresh animal by-products and hides.

The by-products and hide chiller of the present invention comprises a rotatable elongated tank having an inlet end for introducing fresh animal by-products into the tank and an outlet end for removing the by-products from the tank. The side wall of the tank is void of apertures so as to eliminate the cleaning problems associated with apertured tanks. A set of baffle bars are removably mounted within the tank for agitating the by-products, and can be interchanged with other sets of baffle bars having different cross-sectional shapes. The different sets of baffle bars allow different types of by-products and/or hides to be effectively and efficiently chilled in the tank.

A liquid coolant is introduced into the tank for cooling the by-products or hides and is drained from the outlet end of the tank into a strainer unit. The strainer unit has a plurality of removable straining trays which successively strain substantially all solids from the drained coolant. The coolant is then pumped back to the coolant source for recooling and subsequent re-use in cooling additional by-products in the tank.

An outlet plate is removably secured to the outlet end of the tank and has an opening therein through which the coolant normally drains and through which the by-products normally are removed from the tank. The outlet plate can be removed for easy access to the interior of the tank for cleaning purposes and to remove all the liquid and by-products from the tank.

The invention will now be described further, by way of example, with reference to the accompanying drawings, in which:-

Fig. 1 is a plan of the by-products chiller of the present invention;

Fig. 2 is a side elevation of the by-products chiller;

Fig. 3 is a section on the lines 3-3 of Fig. 2;

Fig. 4 is an end view of the by-products chiller on the lines 4-4 of Fig. 2;

Fig. 5 is a section on the lines 5-5 of Fig. 3, showing the stabilizer wheels for preventing the tank from moving longitudinally while rotating;

Fig. 6 is a sectional side elevation showing the slasher unit of the chiller;

Fig. 7 is a partial perspective view showing the coolant inlet pipe of the chiller;

Fig. 8A, 8B and 8C are perspective views of different baffle bars which can be interchangeably secured to the interior of the tank for agitating the by-products or animal hides;

Fig. 9 is a perspective view of the strainer unit of the present invention;

Fig. 10 is a partial plan on the lines 10-10 of Fig. 9 showing part of the lower straining tray of the strainer unit;

Fig. 11 is a view similar to Fig. 10 showing a part of a straining tray positionied above that shown in Fig. 10;

Fig. 12 is a schematic of the byproducts chiller of the present invention; and

Fig. 13 is a simplified side elevation of the chiller with a conveyor and wringer assembly positioned adjacent the outlet end of the tank.

The animal by-products and hides chiller of the present invention is generally designated in the drawings by the reference numeral 10. Chiller 10 is located at the packing plant where the animals are slaughtered. The chiller basically comprises an elongated chilling tank 12 rotatably mounted above a frame 14. Liquid coolant from a coolant source 16 is circulated through tank 12 for cooling the by-products.

More particularly, tank 12 includes a body 18 having a first end 20 with an inlet opening 22 therein and a second end 24 including an outlet plate 26 with an outlet opening 28 therein. Outlet plate 26 is removably secured to the outlet end 24 of tank 12 by bolts 30 or the like. Preferably, plate 26 is comprised of two sections, such that only the lower section need be removed from tank 12 for draining all of the coolant from the tank, as explained later. Preferably, inlet opening 22 has a smaller diameter than outlet opening 28.

While tank 12 is shown to be cylindrical in the drawings, it is understood that body 18 of the tank can be formed from a plurality of panels interconnected to form a polygonal or substantially cylindrical tank.

A pair of trunnion wheels 32 are each rotatably mounted on an axle 34 supported by frame 14 at opposite ends of tank 12. Each pair of trunnion wheels 32 at each end of tank 12 are positioned on each side of the longitudinal axis of the tank so that the tank is rotatably supported thereon.

Chiller 10 includes means for rotating tank 12 about its longitudinal axis as it is supported on trunnion wheels 32. The rotation means generally comprises a motor 36 mounted on frame 14 below tank 12, a first sprocket (not shown) attached to the drive shaft of motor 36, a second sprocket 38 fixed about the perimeter of tank body 18, and a chain 40 drivingly interconnecting the motor sprocket and tank sprocket 38. This, actuation of motor 36 imparts rotation to tank 12. A housing 42 extends substantially around sprocket 38 for safety purposes.

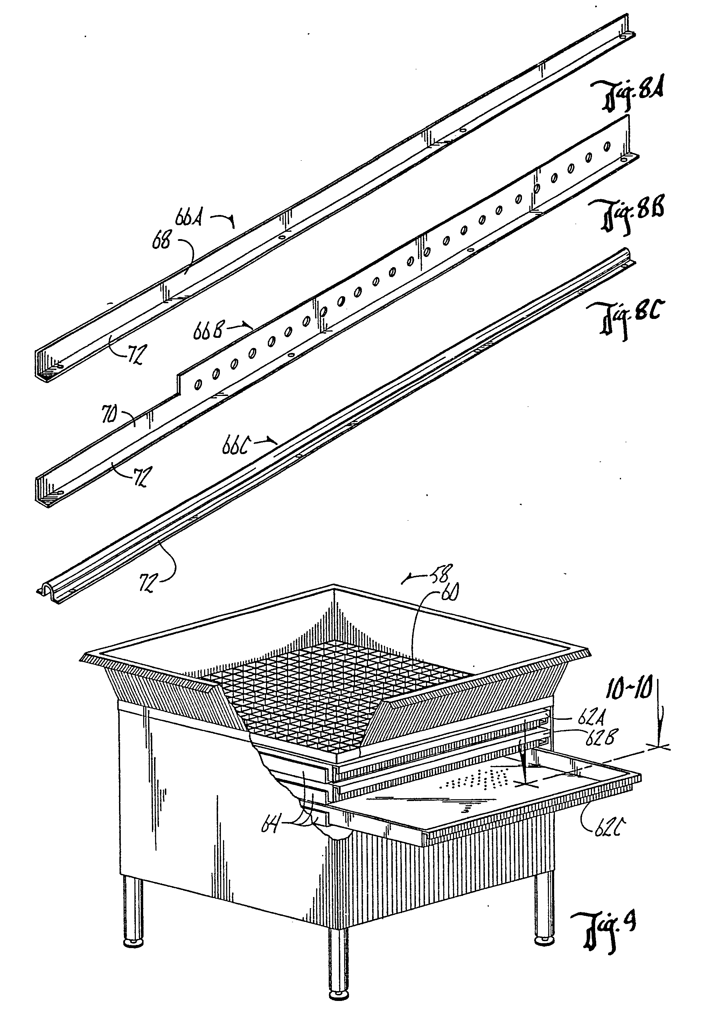

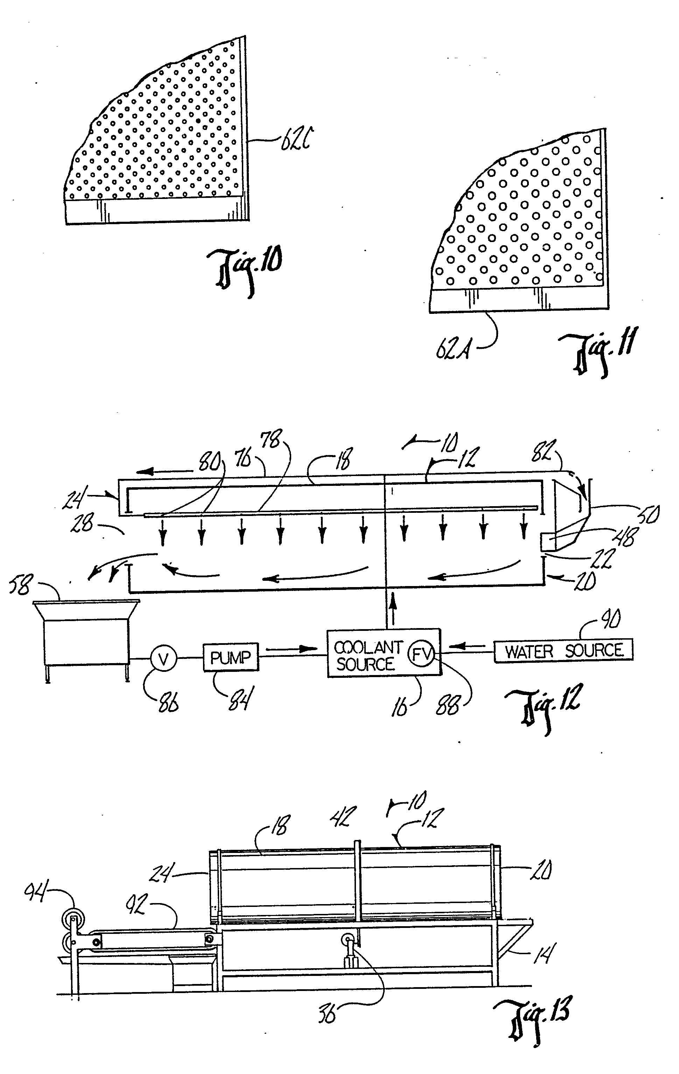

Also mounted on frame 14 is a support structure 44 to which is bolted a pair of stabilizer wheels 46, as best seen in Fig. 5. Stabilizer wheels 46 engage opposite sides of tank sprocket 38 so as to prevent tank 12 from moving longitudinally as the tank rotates upon trunnion wheels 32.

An inlet chute 48 extends through inlet opening 22 so as to deposit fresh animal by-products from a slasher unit 50. Slasher unit 50 is described in detail in applicants co-pending United States application, Serial No. 856,469. Generally, slasher unit 50 slashes the by-products prior to their deposit in tank 12 so as to produce more surface area and thereby make the cooling process more effective and more efficient. Slasher unit 50 includes a motor 52, a blade shaft 54 extending from motor 52 and a plurality of circular slashing blades 56 mounted on shaft 54 for rotation therewith.

Chiller 10 also includes a strainer unit 58 positioned adjacent outlet end 24 of tank 12. Strainer unit 58 serves as a receptacle for the cooled by-products and the liquid coolant as both are expelled from the outlet opening 28 of tank 12. Strainer unit 58 includes a grate 60 and a plurality of straining trays, 62A, 62B, 62C positioned one below the other. Preferably, the holes in grate 60 are approximately one inch square, while the holes in the straining trays become progressively smaller from the top tray to the bottom tray. While straining unit 58 is shown to have three straining trays 62A, 62B and 62C, it is understood that two or more trays could be provided. Also, it is understood that the holes in each successively lower tray be smaller, or at least no greater, than the holes in the next adjacent upper tray.

Trays 62A-62C are supported on opposite sides by L-shaped brackets 64 mounted on strainer unit 58. As seen in Fig. 9, trays 62A-62C are quickly and easily removed from strainer unit 58 for cleaning purposes. The plurality of trays also allows the chilling operation to proceed continuously, since there will always be at least one tray in the strainer unit for straining solids from the liquid coolant, as described below.

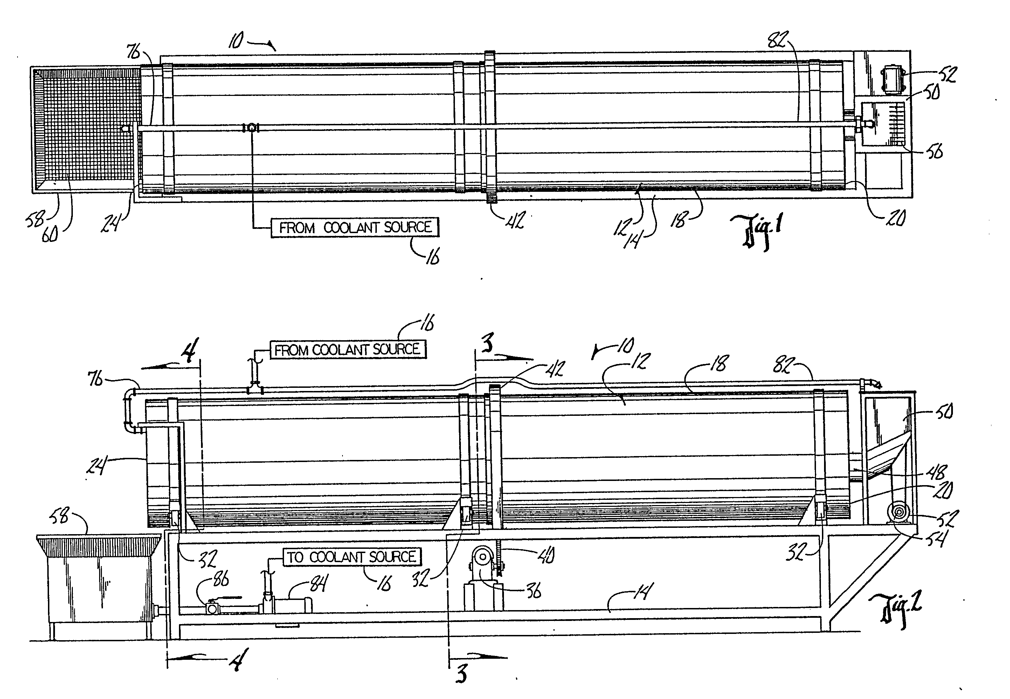

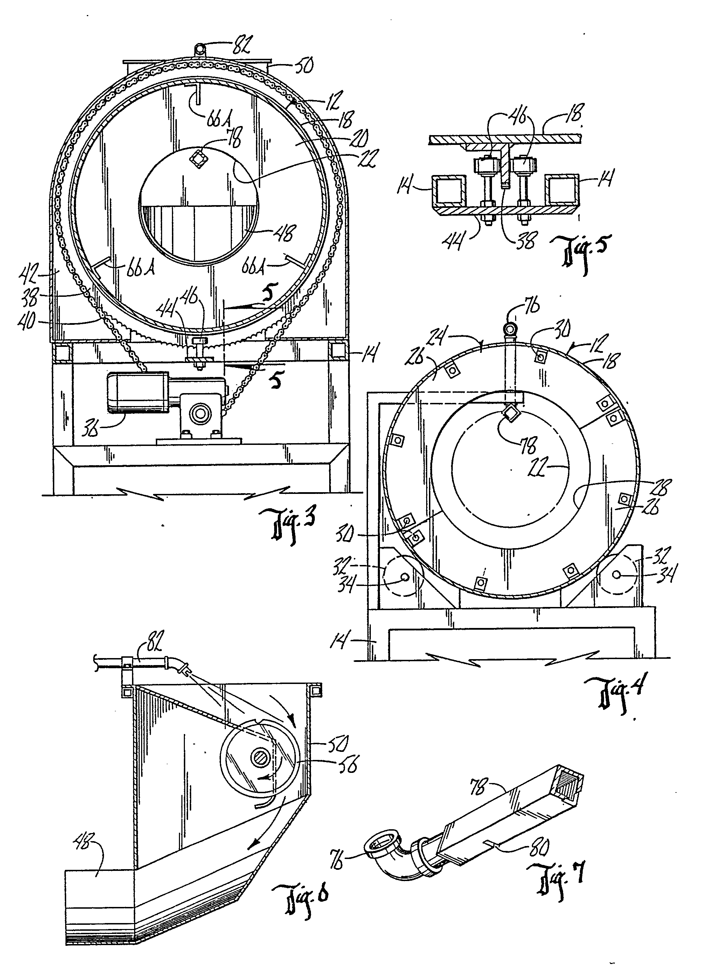

As seen in Fig. 3, a plurality of baffle bars 66 are secured to the interior of body 18 of tank 12. The baffle bars serve to agitate the by-products as the tank rotates. More particularly, bars 66 are removably secured to the interior tank 12 by bolts or the like (not shown).

Figs. 8A, 8B and 8C illustrate three different baffle bars 66A, 66B and 66C, respectively. Bars 66A and 66B are L-shaped, while bar 66C is substantially U-shaped. More particularly, bar 66A has a three inch primary leg 68 as compared to the six inch primary leg 70 of bar 66B. Due to the height of leg 70 of bar 66B, holes are provided therein so that the liquid coolant is not carried by the bar as the tank rotates. Also, the height of leg 70 of bar 66B is reduced adjacent the outlet end 24 of tank 12 so that by-products and liquid coolant are not accidentally spilled or splashed out of the outlet opening 28. Each of bars 66A, 66B and 66C have a depending flange 72 with holes therein for receiving the bolts which secure the bar to the interior of tank 12.

Each of bars 66A-66C is designed for use with a particular type of by-product or hide. Bar 66A is intended for use with pork by-products. Bar 66B is intended for use with beef by-products, which tend to be larger and heavier than pork by-products. Bar 66C is intended for use with hides and therefore has a curved U-shaped surface so as to prevent damage to the hides.

Liquid coolant from the coolant source 16 is supplied to the interior of tank 12 by supply conduit 76. Conduit 76 is connected to a pipe 78 extending into tank 12 as best seen in Fig. 22. Pipe 78 has a plurality of holes 80 cut therein through which the liquid coolant is introduced into tank 12. While pipe 78 is shown to be a square pipe with holes 80 being cut in the lower oriented corner of the square pipe, it is understood that the pipe may be round with holes drilled through the pipe wall. Holes 80 are large in comparison to those provided in sprayers, such as those disclosed in U.S. Patents 4,578,957 and 4,577,466, and therefore do not become clogged as do the sprayers of the prior art. Also, while conduit 76 and pipe 78 are shown in Fig. 12 to extend into tank 12 through outlet opening 26 thereof, this plumbing could also extend into tank 12 through inlet opening 20 thereof.

A second supply conduit 82 provides liquid coolant from the coolant source to slasher unit 50, as best seen in Fig. 2. This supply of coolant to the slasher unit helps lubricate the slasher unit and thereby enhances the operation of the unit.

As by-products and liquid coolant are expelled from outlet opening 26 of tank 12 and received in strainer unit 58, the coolant drains through grate 60 and straining trays 62 and is re-circulated by a pump 84 to the coolant source 16 for recooling thereby. A valve 86 controls the flow of coolant from slasher unit 58 to pump 84, while a float valve 88 controls the level of coolant in coolant source 16, as shown in Fig. 12. Also, a fresh water source 90 is connected to coolant source 16 so that the quantity of liquid coolant can be maintained at its desired level and so that the liquid coolant can be completely changed when necessary.

As shown in Fig. 13, a conveyor 92 may be provided adjacent the outlet end of tank 12 so as to carry the cooled by-products or hides to a desired location. Conveyor 92 allows the liquid coolant expelled from outlet opening 26 of tank 12 to fall into strainer unit 58 for re-circulation. Also when hides are being chilled, a pair of wringer rollers 94 are provided so as to remove excess coolant from the hides.

In operation, the fresh by-products are introduced into slasher unit 50, wherein they are cut so as to expose more surface area for efficient and effective cooling. Slasher unit 50 is not used during the chilling of hides, since it is not desirably to cut the hides. The by-products or hides are deposited in the inlet end of the tank through inlet opening 22 as the tank is rotated by the co-operation of motor 36, sprocket 38 and chain 40. Liquid coolant from coolant source 16 is introduced into tank 12 via supply line 76 and pipe 78. Since there are no apertures in the body 18 of tank 12, the depth of coolant in the tank is maintained at a level extending up to the outlet opening 28 of the tank. Outlet plate 26 may be exchanged with a similar outlet plate such having a different sized outlet opening, such that the depth of the coolant in the tank can be adjusted.

Thus, the by-products and hides are bathed in the coolant. This emersion of the by-products or hides in the coolant hastens the cooling thereof. In comparison, in prior art chillers such as that disclosed in the 4,578,957 and 4,577,466 patents, the coolant continuously drains through the apertures in the tank side wall such that there is no substantial depth to the coolant. In these prior art chillers, the by-products are showered by the liquid coolant, such that a longer time is required to cool the by-products and hides, as compared to the time required by the present chiller.

As additional by-products and liquid coolant are introduced into tank 12, the previously introduced by-products, now cooled, are forced out of outlet opening 28 and received on grate 60 of strainer unit 58. A quantity of liquid coolant also spills out of outlet opening 28 with the cooled by-products. This quantity of coolant drains through the straining trays 62A-62C of strainer unit 58 such that substantially all of the solids carried thereby are removed from the coolant. The quantity of coolant is then pumped by pump 84 to the coolant source 16 for recooling thereby and is then re-used in tank 12 for cooling additional by-products. As trays 62A, 62B and 62C become full of solids or the opening therein becomes plugged, the trays can be removed one at a time for cleaning, while the chiller continues to operate.

At the end of the day or other time that chiller 10 is shut down, outlet plate 26, or the lower half thereof, can be removed so that all of the contents of the tank can be removed therefrom. Also, removal of outlet plate 26 permits easy access to the interior of tank 12 for cleaning purposes and for changing baffle bars 66. Futhermore, since there are no apertures in the sidewall of tank 12, cleaning time is reduced approximately 85%, as compared to the apertured tanks disclosed in the prior art.

Preferably, the liquid coolant comes into tank 12 at approximately 0.5° C (33° F). Since the fresh by-products are considerably warmer, heat is absorbed from the by-products by the liquid coolant such that the by-products are cooled. Accordingly, the life of the by-products is increased and the potential for spoilage is reduced. Also, since the liquid coolant is recirculated in the system, the cost of operating the chiller is minimized.

**Claims**

1. A by-products and hide chiller, comprising an elongated tank having an inlet end for introducing fresh animal by-products into the tank and an outlet end for removing the by-products from the tank, the tank having a sidewall, void of apertures, extending between the inlet and outlet openings, a support for rotatably supporting the tank, means for introducing a liquid coolant from a coolant source into the tank for cooling the by-products or hides therein, the coolant draining from the tank through the outlet end thereof, characterized in that circulation means recirculate the coolant drained from the tank to the coolant source for re-cooling thereby and for subsequent re-introduction into the tank for cooling additional by-products or hides therein and means operatively secured to the tank for rotating the tank about its longitudinal axis such that the by-products or hides are tumbled within the tank and bathed in the coolant and chilled thereby.

2. A chiller according to claim 1, characterized in that an outlet plate is secured to the outlet end of the tank and has an opening therein through which the coolant drains and through which the by-products are removed.

3. A chiller according to claim 2, characterized in that means are provided for removably securing the outlet plate to the outlet end of the tank, whereby the outlet plate can be removed to facilitate cleaning of the tank.

4. A chiller according to claim 2, characterized in that the outlet plate includes a plurality of sections, with at least one section being removably secured to the outlet end of the tank to facilitate cleaning of the tank.

5. A chiller according to claim 1, characterized in that a baffle arrangement is removably mounted in the tank for agitating the by-products.

6. A chiller according to claim 1, characterized in that the tank is of elongated shape, a plurality of sets of baffle bars being so arranged that one of the sets is removably mounted within the tank for agitating the by-products or hides, the bars of each of the sets having cross-sectional shapes for selective use with different types of by-products or hides being chilled.

7. A chiller according to claim 1, characterized in that an associated strainer unit is arranged adjacent the outlet end of the tank for straining substantially all solids from the cooling liquid prior to circulating the liquid, the strainer unit having a plurality of removable straining trays, one being positioned below the other, each tray having a plurality of openings, the openings of each successively lower tray being no larger than the openings of the next adjacent upper tray.

8. A method of preserving fresh animal by-products and hides which are to be further processed, characterized in that it comprises introducing warm by-products or hides into the inlet end of an elongated chilling tank at the slaughter vicinity, introducing liquid coolant from a coolant source into the tank, rotating the tank such that the by-products or hides are tumbled therein and bathed in the coolant whereby heat is transferred from the by-products or hides to the coolant thereby chilling the by-products or hides to minimize spoilage thereof, removing the chilled by-products or hides from the outlet end of the tank, draining the coolant from the outlet end of the tank, recirculating the drained coolant to the coolant source for recooling thereby whereafter the coolant is reintroduced into the tank for chilling additional by-products or hides and storing the chilled by-products or hides at the slaughter vicinity until the chilled by-products or hides are transported for further processing.

9. A method according to claim 8, characterized in that the by-products are moved from the inlet end to the outlet end of the tank by the introduction of additional by-products into the tank and by the introduction of additional coolant into the tank.

10. A method according to claim 8, characterized in that it comprises agitating the by-products to facilitate chilling thereof by the coolant.

FROM COOLANT SOURCE
16

Fig.1

FROM COOLANT SOURCE
16

TO COOLANT SOURCE
16

Fig.2

EP 0 350 543 A1

Fig. 3

Fig. 5

Fig. 4

Fig. 6

Fig. 7

Fig.8A

66A

68

Fig.8B

72

66B

70

Fig.8C

72

66C

72

58

60

10~10

62A

62B

64

62C

Fig.9

Fig.10

62A

Fig.11

Fig.12

Fig.13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 250 086 (MORRIS)<br>* Column 3, line 74 - column 7, line 54; figures 1-7 *<br>--- | 1,2,8,<br>10 | F 25 D 13/06<br>A 23 B 4/06<br>A 23 K 1/10 |
| D,Y | US-A-4 700 546 (MATTSON)<br>* Column 2, line 65 - column 5, line 56; figures 1-11 *<br>--- | 1,2,8,<br>10 | |
| A | US-A-3 240 026 (VAN DOLAH)<br>* Column 4, line 43 - column 6, line 6; figures 3-7 *<br>--- | 1,8,10 | |
| A | US-A-2 310 603 (TAYLOR)<br>* Page 1, right-hand column, line 34 - page 2, left-hand column, line 37; figures 1-3 *<br>--- | 1,2,8,<br>10 | |
| A | GB-B-1 401 102 (POLYSIUS)<br>* Page 2, line 38 - page 3, line 55; figures 1-3 *<br>--- | 5 | TECHNICAL FIELDS SEARCHED (Int. Cl.4) |
| A | US-A-3 555 838 (MORRIS)<br>* Column 5, line 22 - column 6, line 22; figures 4,5 *<br>--- | 7 | F 25 D<br>A 23 B<br>A 23 L<br>F 28 C |
| A | US-A-3 410 101 (MORRIS)<br>--- | | |
| A | US-A-2 840 922 (ERISMAN)<br>--- | | |
| A | US-A-3 488 973 (HARBEN)<br>----- | | |

The present search report has been drawn up for all claims

| Place of search | Date of completion of the search | Examiner |
|---|---|---|
| THE HAGUE | 14-03-1989 | BOETS A.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P0401)